(19) Europäisches Patentamt / European Patent Office / Office européen des brevets

(11) **EP 3 659 801 B1**

(12) **EUROPEAN PATENT SPECIFICATION**

(45) Date of publication and mention of the grant of the patent:
**06.07.2022 Bulletin 2022/27**

(21) Application number: **18839245.0**

(22) Date of filing: **25.07.2018**

(51) International Patent Classification (IPC):
**B32B 27/18** (2006.01)    **B32B 27/00** (2006.01)
**B65D 1/00** (2006.01)    **B65D 1/26** (2006.01)
**C08K 3/08** (2006.01)    **C08L 101/00** (2006.01)
**B32B 27/08** (2006.01)    **C08K 3/10** (2018.01)

(52) Cooperative Patent Classification (CPC):
(C-Sets available)
**B32B 27/08; B32B 27/18; B65D 1/00; B65D 1/26;
C08K 3/10; C08K 3/22; C08K 5/098; C08L 101/00;**
B32B 2307/70; B32B 2307/752; B32B 2439/00;
B32B 2439/70; C08K 2003/2296                    (Cont.)

(86) International application number:
**PCT/JP2018/027962**

(87) International publication number:
**WO 2019/022159 (31.01.2019 Gazette 2019/05)**

(54) **RESIN MOLDED BODY HAVING EXCELLENT DISCOLORATION RESISTANCE**

HARZFORMKÖRPER MIT HERVORRAGENDER VERFÄRBUNGSBESTÄNDIGKEIT

CORPS MOULÉ EN RÉSINE AYANT UNE EXCELLENTE RÉSISTANCE À LA DÉCOLORATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.07.2017   JP 2017144424**

(43) Date of publication of application:
**03.06.2020   Bulletin 2020/23**

(73) Proprietors:
• **Toyo Seikan Group Holdings, Ltd.**
  **Shinagawa-ku**
  **Tokyo 141-8627 (JP)**
• **Toyo Seikan Co., Ltd.**
  **Tokyo 141-8640 (JP)**

(72) Inventors:
• **UEDA, Kousuke**
  **Yokohama-shi**
  **Kanagawa 240-0062 (JP)**
• **TASHIRO, Yuuki**
  **Yokohama-shi**
  **Kanagawa 240-0062 (JP)**
• **ISHIHARA, Takayuki**
  **Yokohama-shi**
  **Kanagawa 240-0062 (JP)**
• **OTSUKI, Azusa**
  **Yokohama-shi**
  **Kanagawa 240-0062 (JP)**
• **TANABE, Toshihiro**
  **Yokohama-shi**
  **Kanagawa 230-0001 (JP)**
• **ATSUGI, Masashi**
  **Yokohama-shi**
  **Kanagawa 230-0001 (JP)**
• **ITOU, Yuusuke**
  **Yokohama-shi**
  **Kanagawa 230-0001 (JP)**
• **SAITOU, Gou**
  **Yokohama-shi**
  **Kanagawa 230-0001 (JP)**

(74) Representative: **J A Kemp LLP**
  **80 Turnmill Street**
  **London EC1M 5QU (GB)**

(56) References cited:
**JP-A- 2008 254 765      US-A1- 2005 287 318**

EP 3 659 801 B1

    **US-A1- 2005 287 318    US-A1- 2015 104 488**
    **US-B2- 9 199 778**

(52)  Cooperative Patent Classification (CPC): (Cont.)

    C-Sets
    **C08K 3/10, C08L 23/12;**
    **C08K 3/22, C08L 23/12;**
    **C08K 5/098, C08L 23/12**

(52)  Cooperative Patent Classification (CPC): (Cont.)

**Description**

Technical Field:

The present invention relates to an article formed of a thermoplastic resin. More specifically, the present invention relates to a resin article containing a specific metal or metal compound. Even when the article provided as a container is filled with a content containing elemental sulfur or the like, discoloration of the container can be prevented or decreased.

Background Art:

A container made of resin tends to pass more oxygen through its wall in comparison with a container made of a metal or glass. Therefore, in order to improve preservability of contents, the resin-made container is typically provided as a multilayer container having an intermediate layer of a gas-barrier resin such as an ethylene-vinyl alcohol copolymer.
Further in conventional techniques, oxygen scavengers are used to remove oxygen in the container. A container prepared by blending an oxygen scavenger like an iron powder has excellent oxygen absorbing ability. However, there may be a limitation in application of the scavenger since the oxygen scavenger can impart a specific color tone to the container, and thus, it cannot be applied to a container that is required to involve transparency.
Another example of well-known containers is formed of an oxygen-absorbing resin composition that is capable of collecting oxygen in the container without degrading transparency of the container. For instance, Patent document 1 below describes plastic multilayer container formed of a laminate structure composed of an intermediate layer of a resin composition of a gas barrier thermoplastic resin blended with an organic metal complex of a transition metal, and layers of moisture-proof thermoplastic resin arranged on both surfaces of the intermediate layer. The gas barrier thermoplastic resin has an oxygen permeation coefficient of not more than $10^{-12}$ cc ▪ cm/cm$^2$ ▪ sec ▪ cmHg at 20°C and 0%RH, and the amount of moisture adsorption at 20°C and 100%RH is not less than 0.5%.
Patent document 2 below describes a wall for a package, which wall comprises, or includes a layer comprising, a composition comprising a polymer and having oxygen-scavenging properties, characterized in that the composition scavenges oxygen through the metal-catalyzed oxidation of an oxidizable organic component thereof.
The container having a layer of an oxygen-absorbing resin composition can prevent or decrease oxygen permeation from the outside while maintaining transparency of the container. Moreover, since the residing oxygen in the container is removed, the preservability of the contents can be improved further.
Patent Document 3 relates to an article such as a polymeric film that includes a sulfur scavenger and optionally also an oxygen scavenger.
Patent Document 4 relates to an oxygen absorbing resin composition, an oxygen absorbing multilayered body, and an oxygen absorbing hollow container that can absorb oxygen. The oxygen absorbing resin composition includes: (I) an oxygen absorbing agent consisting of a metal (a metal of (I)) obtained by subjecting an alloy comprising (A) at least one transition metal selected from the group consisting of manganese, iron, platinum, and copper group metals and (B) at least one metal selected from the group consisting of aluminum, zinc, tin, lead, magnesium, and silicon, to treatment with an acidic or alkaline aqueous solution to elute and remove at least a part of the component (B); and (II) a thermoplastic resin.
Patent Document 5 relates to a composite material with at least one supporting material and at least one antimicrobial agent from the group of metals and metal compounds.

Prior Art Documents:

Patent Documents:

[Patent Document 1] JP H01-278344
[Patent Document 2] JP H02-500846
[Patent Document 3] US 2005/287318
[Patent Document 4] US 9 199 778
[Patent Document 5] US 2015/104488

Summary of the Invention:

Problems to be solved by the invention:

However, the above-described oxygen-absorbing resin composition contains a transition metal catalyst such as cobalt salt as a catalyst to accelerate the oxygen absorption reaction. The container having the layer of oxygen-absorbing resin composition is filled with a content containing sulfur-containing amino acid such as meat and seafood and subjected to a high-temperature and high-humidity condition of retort sterilization or boil sterilization, then, hydrogen sulfide generated from the content reacts with the transition metal catalyst like cobalt salt in the wall so as to form cobalt sulfide or the like, causing problems such as blackening of the wall of the container.
Discoloration of the container wall is caused not only by the oxygen-absorbing resin composition, but it may occur also due to the reaction between the resin composition containing the metal or the metal compound and the corrosive gas or the volatile sulfur compound generated from the contents.
Therefore, an object of the present invention is to provide an article composed of a thermoplastic resin blended with a metal or a metal compound that reacts with a corrosive gas or a volatile sulfur compound and gives a color, the example thereof is a container that has a layer of an oxygen-absorbing resin composition. The article is capable of preventing or decreasing discoloration even when being subjected to retort sterilization or the like.

Means for solving the problems:

The present invention provides an article formed of a thermoplastic resin including at least one metal selected from three metals of Zn, Sn and Mn or one metal compound of any of the three metals, and a metal or a metal compound other than the three metals and capable of reacting with a corrosive gas or a volatile sulfur compound so as to give a color. The three metals or the metal compounds function as scavengers for the corrosive gas or the volatile sulfur compound; wherein the metal other than the three metals is derived from Co and/or Fe; wherein the article has a multilayer structure including a layer that contains the metal selected from the three metals or the metal compound and another layer that contains the metal or the metal compound other than the three metals; wherein the multilayer structure includes at least an inner layer, an intermediate layer, an oxygen-absorbing layer and an outer layer; and wherein the metal selected from the three metals or the metal compound is contained in the intermediate layer, and the metal or the metal compound other than the three metals is contained in the oxygen-absorbing layer.
It is preferable in the article of the present invention that:

1. the corrosive gas is hydrogen sulfide;
2. the metal selected from the three metals or the metal compound is derived from zinc oxide or zinc stearate;
3. the metal selected from the three metals or the metal compound is contained in a layer arranged inside the layer containing the metal or the metal compound other than the three metals;
4. the metal selected from the three metals or the metal compound in an amount of 0.1 to 5.0 wt% is contained in the article;
5. the article having the multilayer structure is a cup-shape container having a body with a haze of not more than 70%; and
6. the article is a container to be filled with a content containing an amino acid including elemental sulfur.

Effects of the invention:

The present invention relates to an article containing oxygen-absorbing resin composition, for instance. The article contains a metal or a metal compound that is incorporated to react with a corrosive gas or a volatile sulfur compound derived from the contents and may give a color (hereinafter, the metal or the metal compound may be called simply "blackened metal") . The article of the present invention contains also at least one metal selected from the three metals of Zn, Sn and Mn (hereinafter, it may be called "scavenger"). Since these three metals or the metal compounds scavenge efficiently the corrosive gas or the volatile sulfur compound derived from the contents, discoloration of the article, which is caused by reaction with the volatile sulfur compound or the like, can be prevented or decreased.
Further, use of an organic acid salt of any of the three metals as the scavenger can provide an article with excellent appearance, without impairing the transparency of the article. An article of the present invention, which is formed as a cup-shape container, possesses transparency. The haze at the body of the container after being filled with contents and retort-sterilized is not more than 70%.
The Examples below are directed to a multilayer container comprising oxygen-absorbing barrier resin composition containing cobalt neodecanoate. Comparative Example 1 relates to a case where the container does not contain the at least one metal selected from three metals of Zn, Sn and Mn or a metal compound thereof, while Examples 1-6 each relates to a case where the article has a layer of a zinc-containing resin composition. The results below demonstrate that both Δ*E and haze of Comparative Example 1 are inferior to those of Examples 1-6. This result indicate that the sulfur compound is scavenged preferentially by the at least one metal selected from three metals of Zn, Sn and Mn or the metal compound thereof and that these three metals or metal compounds impose less influence on the appearance of the container even when they react with the sulfur compound.

Mode for Carrying Out the Invention:

The article of the present invention is characterized in that it is formed of a thermoplastic resin comprising at least one metal selected from the group consisting of three metals of Zn, Sn and Mn or one metal compound thereof, and a metal or a metal compound that is not any of the three metals and that reacts with a corrosive gas or a volatile sulfur compound so as to give a color. Since the three metals or metal compounds thereof function as scavengers for the corrosive gas or the volatile sulfur compound, reaction between the metal or the metal compound other than the three metals and the corrosive gas or volatile sulfur compound derived from the contents is prevented or decreased, whereby discoloration of the article can be prevented.

[Scavenger]

When the aforementioned metal or the metal compound other than the three metals reacts with the corrosive gas or the volatile sulfur compound, the metal or the metal compound will be blackened. In the present invention, at least one metal selected from the three metals of Zn, Sn and Mn or the metal compound reacts preferentially with the corrosive gas or the volatile sulfur compound, thereby forming a salt like ZnS so as to prevent or decrease the reaction between the metal or the metal compound other than the three metals and the corrosive gas or the volatile sulfur compound. As a result, discoloration of the article can be prevented effectively.

That is, when at least one metal selected from Zn, Sn and Mn or the metal compound reacts with a corrosive gas or a volatile sulfur compound that may cause discoloration of the article, the reaction provides white ZnS, greenish-yellow SnS, or pink Mns. The light-color discoloration is not noticeable, and thus, it may not deteriorate the appearance of the container.

In the present invention, examples of the compound of metal selected from Zn, Sn and Mn to be used as scavenger include metal compounds such as inorganic salts or organic salts of these metals. Examples of the inorganic salt include halides such as oxides and chlorides, sulfur oxysalts such as sulfates, nitrogen oxysalts such as nitrates, phosphorus oxysalts such as phosphates, and silicates. Examples of the organic salt include carboxylate, sulfonate, and phosphonate. For improving the transparency of the article, the organic salts are preferred. Specifically, higher fatty acid metal salts such as stearic acid metal salts are preferred.

Examples of the most preferable scavengers include zinc oxide and zinc stearate.

In preparation of the scavenger, the kinds and the amounts of metals to be blended should be determined with reference to the kind and amount of the blackened metal contained in the article, or the kind and amount of contents that can generate the corrosive gas or the like, though it is not always possible to apply the blend amount to other embodiments. For instance, in an article that contains an oxygen-absorbing resin composition containing cobalt neodecanoate as a catalyst in an amount of 10 to 1000 ppm in terms of metal, the three metals are contained in the article preferably in an amount of 0.001 to 5.0 wt%, particularly preferably 0.01 to 0.52 wt% in terms of metal.

[Metals other than Zn, Sn or Mn and metal compounds]

The article of the present invention may contain an oxygen-absorbing resin composition containing a transition metal compound as a reaction catalyst in order to improve content preservability. The article may further contain an antibacterial resin composition containing fine particles of silver and/or copper to impart antibacterial properties. When the metal or metal compound contained in the article is brought into contact with components that can generate a corrosive gas or a volatile sulfur compound, reaction with the transition metal compound and the metal fine particles may result in discoloration to black, thereby degrading the product value of the article.

The metal or metal compound other than Zn, Sn and Mn can react with the corrosive gas or the volatile sulfur compound so as to be discolored.

Examples of metals to be contained in the oxygen-absorbing resin composition mentioned below as the reaction catalyst to accelerate oxidation of the oxidizing organic components include not only periodic table Group 8 metals such as iron, cobalt and nickel, but periodic table Group 11 metals such as copper and silver, periodic table Group 4 metals such as titanium and zirconium, periodic table Group 5 metals such as vanadium, and periodic table Group 6 metals such as chromium. Further, fine particles of silver, copper, gold or the like may be contained to impart antibacterial properties to the article.

Examples of the compounds of these metals that may be contained in the article include metal compounds of inorganic salts or organic salts of these metals. Examples of the metal compounds are similar to the examples of the aforementioned scavengers.

Some of the aforementioned metals can react with the corrosive gas, the volatile sulfur compound or the like. In such a case, the metals are blackened to seriously affect the color tone of the article. Examples of the metal include cobalt, iron, silver, copper and titanium. The effect of present invention is remarkable when cobalt or iron is contained. These metals or metal compounds may be contained as a combination thereof.

In the article of the present invention, the oxygen-absorbing layer at least contains a metal or a metal compound other than the three metals, wherein said metal is derived from Co and/or Fe.

[Corrosive gas and volatile sulfur compound]

Examples of the corrosive gas or the volatile sulfur compound of the present invention, which can be scavenged with a scavenger, include a gas containing a halogen such as sulfur, chlorine and fluorine, and in particular, gaseous hydrogen sulfide and the like.

Specifically, it is hydrogen sulfide generated by thermal decomposition of sulfur-containing amino acids such as cystine and cysteine. The sulfur-containing amino acids are contained in seafood or meats to fill the article, and it is thermally decomposed due to the heat during retort sterilization or the like.

[Article]

The article of the present invention contains both the metal or the metal compound (blackened metals) other than Zn, Sn and Mn, which can react with the corrosive gas or the volatile sulfur compound so as to give a color, specifically, wherein the metal other than the three metals is derived from Co and/or Fe, and also a scavenger composed of at least one metal selected from the three metals of Zn, Sn and Mn or a metal compound thereof. The blackened metal and the scavenger are contained in separate layers of the article in order to make the scavenger preferentially react with the corrosive gas or the like.

The scavenger is contained in a layer arranged inside a layer containing the blackened metal, so that the scavenger can react preferentially with the corrosive gas or the like generated from the content.

As mentioned above, the article of the present invention has layers each containing the scavenger or the blackened metal, and the layer containing scavenger is arranged inside the layer containing the blackened metal, though there is no particular limitation on the kinds and positions of other layers, or on the shape of the article or the shaping method.

[Shaping method]

In production of the article of the present invention, a preform having a predetermined layer structure is formed by any known method such as injection or extrusion, and then, the preform is subjected to melt-forming and solid-phase forming (such as blow-forming, vacuum forming, or plug-assist forming) . Alternatively, the respective resins are made confluent and melted in the multilayer die, and the molten resin is extruded to seal the resin that will make the intermediate layer. The thus extruded resin is cut avoiding the part including the intermediate layer, introduced into the mold to be pressed with a core.

A bottle-shape container can be produced by preparing a preform of a test tube shape, which is then subjected to blow forming. Alternatively, a tube-shape preform may be prepared and pinched off at one end and then directly blown to obtain a bottle-shape container.

A cup-shape container or a tray-shape container can be obtained by preparing a sheet-like preform, which is then subjected to plug-assist forming such as vacuum pressure forming or air pressure forming.

The shape of the articles is not limited to the above examples, but it may be a tube prepared by extrusion using a multilayer die. Alternatively, the article may be a film, a sheet or the like.

In the present invention, a cup-shape container prepared by the above-mentioned vacuum pressure forming or air pressure forming is preferred particularly.

In the present invention, both the resin layer containing blackened metal (for instance, an oxygen-absorbing layer) and the scavenger-containing resin layer are present as intermediate layers in the article. Examples of the other layers include an inner layer and an outer layer, and a gas barrier layer, a regrind layer, and an adsorbent-containing layer that contains an adsorbent like zeolite, and the layers can be selected suitably.

[Inner/outer layer]

Examples of the material for the inner layer and the outer layer of the article of the present invention include olefin resins and polyester resins.

Examples of the olefin resins include: polyethylenes such as low density polyethylene (LDPE), middle density polyethylene (MDPE), high density polyethylene (HDPE), linear low density polyethylene (LLDPE), and linear very low density polyethylene (LVLDPE); polypropylene; an ethylene-propylene copolymer; polybutene-1; an ethylene-butene-1 copolymer; a propylene-butene-1 copolymer; an ethylene-propylene-butene-1 copolymer; an ethylene-vinyl acetate copolymer; an ion crosslinked olefin copolymer (ionomer); and a cyclic olefin copolymer (COC). These resins are conventionally used as packaging materials.

These olefin resins are of extrusion grade or injection grade, and they have been used in the field of packaging material.

Examples of the polyester resin include thermoplastic polyesters such as polyethylene terephthalate, polybutylene terephthalate and polyethylene naphthalate, and blends of these polyesters and polycarbonate or arylate resins.

In general, a majority of the ester repeating units (typically, not less than 60 mol%, and in particular, not less than 80 mol%) are the ethylene terephthalate units. It is preferable that polyethylene terephthalate (PET)-based polyesters having a glass transition temperature (Tg) in a range of 50 to 90°C, in particular, 55 to 80°C, and a melting point (Tm) in a range of 200 to 275°C, in particular, 220 to 270°C, are used for forming the article.

Though homopolyethylene terephthalate is used most suitably for the PET-based polyester, any copolyesters containing the above-defined contents of ethylene terephthalate unit also can be used preferably.

Examples of the dibasic acid other than the terephthalic acid in the copolymeric polyester include: aromatic dicarboxylic acids such as isophthalic acid, phthalic acid, and naphthalenedicarboxylic acid; alicyclic dicarboxylic acids such as cyclohexanedicarboxylic acid; and aliphatic dicarboxylic acids such as succinic acid, adipic acid, sebacic acid, and dodecanedioic acid. These components can be used alone or as a combination of two or more thereof. Examples of the diol component other than ethylene glycol include one or more kinds of ethylene oxide adducts of propylene glycol, 1,4-butanediol, diethylene glycol, 1,6-hexylene glycol, cyclohexanedimethanol, and bisphenol A. These components can be used alone or as a combination of two or more thereof.

The polyester resin is required to have a molecular weight sufficient at least to form a film. Typically, the intrinsic viscosity (I.V.) is in a range of 0.6 to 1.40 dl/g, and in particular, 0.63 to 1.30 dl/g.

The inner layer and the outer layer are not necessarily formed of the same kind of resin. It is also possible to form the outer layer of the aforementioned polyester resin and form the inner layer of the olefin resin, for instance. In the inner/outer layer, a nucleating agent, an antioxidant, an anti-blocking agent, a lubricant, a modifier, a pigment, a UV absorber and the like can be further blended as required.

[Gas barrier layer]

Examples of the resin for constituting the gas barrier layer include an ethylene vinyl alcohol (EVOH) copolymer and a polyamide resin, though the present invention is not limited to these examples.

The EVOH copolymer can be a copolymer that has been used as an oxygen barrier resin in the field of packaging material. An example of a preferably used saponified copolymer is obtained by saponifying an ethylene-vinyl acetate copolymer having an ethylene content of 20 to 60 mol%, particularly 25 to 50 mol%, so that the saponification degree reaches 96 mol% or more, in particular, 99 mol% or more, though the present invention is not limited to the example. This EVOH copolymer is required to have a molecular weight sufficient to form a film. In general, the intrinsic viscosity in a mixed solvent having a weight ratio of phenol/water is 85/15 is 0.01 dl/g or more, in particular, 0.05 dl/g or more in a measurement at 30°C.

Examples of the polyamide resin include nylon 6, nylon 6,6, a nylon 6/6,6 copolymer, nylon 6,10, nylon 11, nylon 12, nylon 13, and a xylylene group-containing polyamide.

Among these polyamide resins, the xylylene group-containing polyamide resin is used particularly as it is excellent in gas barrier property. Specific examples of the xylylene group-containing polyamide include: homopolymers such as polymetaxylylene adipamide, polymetaxylylene sebacamide, polymetaxylylene suberamide, polyparaxylylene pimeramide, and polymetaxylylene azelamide; copolymers such as a metaxylylene/paraxylylene adipamide copolymer, a metaxylylene/paraxylylene pimeramide copolymer, a metaxylylene/paraxylylene sebacamide copolymer, and a metaxylylene/paraxylylene azelamide copolymer; and copolymers obtained by copolymerizing components of these homopolymers or copolymers with any of aliphatic diamines like hexamethylene diamine, alicyclic diamines like piperazine, aromatic diamines like para-bis(2-aminoethyl)benzene, aromatic dicarboxylic acids like terephthalic acid, lactams like ε-caprolactam, ω-aminocarboxylic acids like 7-aminoheptanoic acid, and aromatic aminocarboxylic acids like para-aminomethylbenzoic acid. Among them, a polyamide resin obtained from a diamine component based on metaxylylenediamine and/or paraxylylenediamine and aliphatic dicarboxylic acid and/or aromatic dicarboxylic acid is used particularly preferably.

[Oxygen-absorbing layer]

In the present invention, the aforementioned blackened metal is used as a catalyst for the oxygen-absorbing resin composition. The oxygen-absorbing resin composition used here is a resin composition based on a resin selected from the aforementioned olefin resin, the polyester resin, a gas barrier resin or the like, and an oxidizing organic component and a transition metal catalyst are incorporated in the resin.

Examples of the oxidizing organic component include polyene polymers such as polybutadiene (BR), polyisoprene (IR), natural rubber, nitrile-butadiene rubber (NBR), styrene-butadiene rubber (SBR), chloroprene rubber, and ethylene-propylene-diene rubber (EPDM).

Preferably, carboxylic acid groups, carboxylic anhydride groups, and hydroxyl groups are introduced into the polyene polymers. An example of the monomer used to introduce these functional groups is an ethylene unsaturated monomer having the aforementioned functional group.

For these monomers, unsaturated carboxylic acids or their derivatives are used preferably. Specific examples thereof include: $\alpha$, $\beta$-unsaturated carboxylic acids such as acrylic acid, methacrylic acid, maleic acid, fumaric acid, itaconic acid, citraconic acid and tetrahydrophthalic acid; unsaturated carboxylic acids such as bicyclo[2,2,1]hept-2-ene-5,6-dicarboxylic acid; $\alpha$,$\beta$-unsaturated carboxylic acid anhydrides such as maleic anhydride, itaconic anhydride, citraconic anhydride, and tetrahydrophthalic anhydride; and unsaturated carboxylic acid anhydrides such as bicyclo[2,2,1]hept-2-ene-5,6-dicarboxylic acid anhydride.

[Transition metal catalyst]

In the transition metal catalyst to be used together with the aforementioned oxidizing organic component, periodic table Group 8 metals such as iron, cobalt and nickel are used preferably as the transition metals. In addition, Group 11 metals such as copper and silver, Group 4 metals such as tin, titanium and zirconium, Group 5 metals such as vanadium, Group 6 metals such as chromium, Group 7 metals such as manganese, and the like also may be used preferably. Among these examples, particularly cobalt is often used as it can promote remarkably oxygen absorption (oxidation of oxidizing organic components) . As mentioned above, it often is blackened as a result of reaction with a corrosive gas or a volatile sulfur-based compound.

The transition metal catalyst is generally used in the form of a low-valent inorganic/organic salt of the transition metal or a low-valent complex salt of the transition metal. Examples of the inorganic salt include halides such as chlorides, sulfur oxysalts such as sulfates, nitrogen oxysalts such as nitrates, phosphorus oxysalts such as phosphates, and silicates.

Examples of the organic salt include carboxylate, sulfonate, and phosphonate. Among them, carboxylate is used preferably for the purpose of the present invention. Specific examples thereof include transition metal salts such as acetic acid, propionic acid, isopropionic acid, butanoic acid, isobutanoic acid, pentanoic acid, hexanoic acid, heptanoic acid, isoheptanoic acid, octanoic acid, 2-ethylhexanoic acid, nonanoic acid, 3,5,5-trimethylhexanoic acid, decane acid, neodecanoic acid, undecanoic acid, lauric acid, myristic acid, palmitic acid, margaric acid, stearic acid, arachidic acid, lindelic acid, tuzuic acid, petrothelic acid, oleic acid, linoleic acid, linolenic acid, arachidonic acid, formic acid, oxalic acid, sulfamic acid, and naphthenic acid.

Examples of the transition metal complexes include complexes with $\beta$-diketone or $\beta$-keto acid ester. Examples of the $\beta$-diketone or $\beta$-keto acid ester include acetylacetone, ethyl acetoacetate, 1,3-cyclohexadione, methylenebis-1,3-cyclohexadione, 2-benzyl-1,3-cyclohexadione, acetyltetralone, palmitoyltetralone, stearoyltetralone, benzoyltetralone, 2-acetylcyclohexanone, 2-benzoylcyclohexanone, 2-acetyl-1,3-cyclohexadione, benzoyl-p-chlorobenzoylmethane, bis(4-methylbenzoyl)methane, bis(2-hydroxybenzoyl)methane, benzoylacetone, tribenzoylmethane, diacetylbenzoylmethane, stearoylbenzoylmethane, palmitoylbenzoylmethane, lauroylbenzoylmethane, dibenzoylmethane, bis(4-chlorobenzoyl)methane, benzoylacetylphenylmethane, stearoyl(4-methoxybenzoyl)methane, butanoylacetone, distearoylmethane, stearoylacetone, bis(cyclohexanoyl)methane, and dipivaloylmethane.

As noted elsewhere herein, in the article of the present invention, the oxygen-absorbing layer at least contains a metal or a metal compound, wherein said metal is derived from Co and/or Fe.

[Adhesive resin layer]

The adhesive resin layer is not an essential component, but it can be made from an adhesive resin conventionally used for forming an adhesive resin layer. An example thereof is a graft-modified olefin resin that is graft-modified with maleic anhydride. In this case, preferred examples of the olefin resin to be graft-modified include polyethylene, polypropylene, and an ethylene-$\alpha$-olefin copolymer.

[Layer constitution]

Examples of the layer constitution of the article of the present invention will be described below, though the present invention is not limited to these examples.

In the following examples, SC layer is an oxygen-absorbing layer as a blackened metal-containing resin layer, Zn layer is a scavenger-containing resin layer, GB layer is an oxygen barrier layer comprising a barrier resin such as an EVOH copolymer, AD layer is an adhesive layer, and RG layer is a regrind layer.

inner layer / Zn layer / SC layer / outer layer
inner layer / AD layer / Zn layer /SC layer / AD layer / outer layer
inner layer / Zn layer / GB layer / SC layer / GB layer / outer layer
inner layer / Zn layer / AD layer / SC layer / AD layer / outer layer
inner layer / Zn layer / AD layer / GB layer / SC layer / GB layer / AD layer / outer layer
inner layer / Zn layer / AD layer / SC layer / GB layer / AD layer / outer layer
inner layer / Zn layer / AD layer / GB layer / SC layer / outer layer
inner layer / Zn layer / SC layer / AD layer / GB layer / AD layer / outer layer
inner layer / Zn layer / AD layer / GB layer / SC layer / GB layer / AD layer / RG layer / outer layer
inner layer / Zn layer / AD layer / GB layer / AD layer / RG layer / SC layer / AD layer / GB layer / AD layer / outer layer

Among the above examples of layer constitution, the preferred constitution is: inner layer / Zn layer / AD layer / GB layer / SC layer / GB layer / AD layer / outer layer. It is more preferable that an adsorbent like zeolite is blended in any of the layers, or an adsorbent layer or a deodorant layer is arranged between any pair of the layers.

Examples:

[Evaluation method]

In the evaluation, Sample A is a multilayer container filled with water as a content that cannot cause blackening of the container at the time of the heat treatment. Sample B is a multilayer container filled with 0.5 wt% cysteine aqueous solution as a content that can cause blackening of the container at the time of the heat treatment. The Samples A and B for each Example were subjected to retort sterilization under the conditions of 115°C for 60 minutes, then evaluated as described below.

[Discoloration evaluation]

After discharging the contents from Samples A and B, the surfaces of the bodies of these Samples were cut out to obtain sample pieces. *L*a*b of these sample pieces were measured with a chroma meter (CR-400 manufactured by Konica Minolta Inc.), and $\Delta^*E$ was calculated from the following Equation (1).

$$\Delta^*E = \{ (^*L_B - {}^*L_A)^2 + (^*a_B - {}^*a_A)^2 + (^*b_B - {}^*b_A)^2 \}^{0.5} \cdots (1)$$

($^*L_A {}^*a_A {}^*b_A$ is the *L*a*b measured value of Sample A, and $^*L_B {}^*a_B {}^*b_B$ is the *L*a*b measured value of Sample B)

[Transparency evaluation]

A sample piece was obtained by cutting out the body surface of the Sample B after discharging the content. Liquid paraffin was applied on the sample piece, and the internal haze was measured with SM color computer (MODEL SM-4 manufactured by Suga Test Instruments Co., Ltd.)

(Example 1)

A multilayer sheet including eight layers of five kinds was produced from a polypropylene resin having 0.5 g/10min of MFR , an adhesive resin, an ethylene vinyl alcohol copolymer resin (hereinafter "EVOH"),a pellet of an oxygen-absorbing barrier resin composition, a pellet of zinc-containing resin composition pellet.
A pellet of an oxygen-absorbing barrier resin composition was prepared from, EVOH, cobalt neodecanoate, and maleic acid-modified polybutadiene, where the content of the cobalt neodecanoate was 0.23 parts by weight and the content of the maleic acid-modified polybutadiene was 5.00 parts by weight with respect to 94.77 parts by weight of the EVOH. A pellet of zinc-containing resin composition was prepared by adding 5 parts by weight of zinc stearate to 95 parts by weight of polypropylene resin having 0.5 g/10min of MFR (zinc compound concentration: 5 wt%).

The layer constitution and the weight rate when viewed from the outside were as follows.

polypropylene layer (39 wt%)
adhesive resin layer (2 wt%)
EVOH layer (6 wt%)
oxygen-absorbing barrier resin composition layer (6 wt%) EVOH layer (6 wt%)
adhesive resin layer (2 wt%)
zinc-containing resin composition layer (10 wt%)
polypropylene layer (29 wt%)

The total thickness was 1200 μm.

Here, the concentration of the zinc compound in the zinc-containing resin composition layer (hereinafter, "in-layer zinc compound concentration") was 5 wt%, the concentration of the zinc compound in the multilayer sheet (hereinafter, "total zinc compound concentration") was 0.5wt%, or 0.052 wt% in terms of metal (zinc).

The multilayer sheet was shaped as a cup by use of plug-assist vacuum pressure forming machine, thereby producing multilayer containers. The multilayer containers were subjected to retort treatment with reference to the evaluation method, thereby producing Samples A and B to conduct evaluations on the discoloration and transparency. The evaluation results are shown in Table 1.

(Example 2)

A multilayer sheet, a multilayer container, Sample A and Sample B were produced and subjected to a discoloration evaluation and a transparency evaluation in the same manner as in Example 1, except that the zinc-containing resin composition layer was formed of the zinc-containing resin composition pellet (zinc compound concentration: 5 wt%) and a polypropylene resin having 0.5 g/10min of MFR, and the in-layer zinc compound concentration and the total zinc compound concentration were determined as 1 wt% and 0.1 wt%, respectively. The evaluation results are shown in Table 1.

(Example 3)

A multilayer sheet, a multilayer container, Sample A and Sample B were produced and subjected to a discoloration evaluation and a transparency evaluation in the same manner as in Example 1, except that the weight rate of the zinc-containing resin composition layer was set to 20 wt%, the weight rate of the polypropylene layer at the inner layer side was set to 19 wt%, the zinc-containing resin composition layer was composed of the zinc-containing resin composition pellet (zinc compound concentration: 5 wt%) and a polypropylene resin containing 0.5 g/10min of MFR, the in-layer zinc compound concentration was set to 2 wt%, and the total zinc compound concentration was set to 0.4 wt%. The evaluation results are shown in Table 1.

(Example 4)

The layer constitution and the weight rates when viewed from the outside were as follows.

polypropylene layer (15 wt%)
regrind layer (23 wt%)
adhesive resin layer (2 wt%)
EVOH layer (6 wt%)
oxygen-absorbing barrier resin composition layer (6 wt%) EVOH layer (6 wt%)
adhesive resin layer (2 wt%)
zinc-containing resin composition layer (10 wt%) adsorbent layer (10 wt%)
polypropylene layer (20 wt%)

The adsorbent layer included Na type ZSM5 Zeolite as adsorbent and a polypropylene resin comprising 0.5 g/10min of MFR as base resin so that the adsorbent concentration in the layer would be 2 wt%. The zinc-containing resin composition layer was formed of the zinc-containing resin composition pellet and polypropylene resin comprising 0.5 g/10min of MFR so that the in-layer zinc compound concentration would be 2 wt% and the total zinc compound concentration would be 0.2 wt%. The evaluation results are shown in Table 1.

(Example 5)

A multilayer sheet, a multilayer container, Sample A and Sample B were produced and subjected to a discoloration evaluation and a transparency evaluation in the same manner as in Example 1, except that the zinc-containing resin composition layer was replaced by a mixture layer of a zinc-containing resin composition and an adsorbent. The mixture layer was formed of the zinc-containing resin composition pellet (zinc compound concentration: 5 wt%) and Na type ZSM5 Zeolite as the adsorbent, and an adjacent layer was formed of a propylene resin comprising 0.5 g/10min of MFR, where the concentration of the in-layer adsorbent was set to be 2 wt%, the in-layer zinc compound concentration was set to be 2 wt%, and the total zinc compound concentration was set to be 0.2 wt%. The evaluation results are shown in Table 1.

(Example 6)

A multilayer sheet, a multilayer container, Sample A and Sample B were produced and subjected to a discoloration evaluation and a transparency evaluation in the same manner as in Example 5, except that the zinc-containing resin composition pellet (zinc compound concentration: 5 wt%) contained zinc oxide in place of zinc stearate. The evaluation results are shown in Table 1.

(Comparative Example 1)

A multilayer sheet, a multilayer container, Sample A and Sample B were produced and subjected to a discoloration evaluation and a transparency evaluation in the same manner as in Example 4, except that the layer constitution and the weight rates of the multilayer sheet when viewed from the outside were as follows.

polypropylene layer (10 wt%)
regrind layer (29 wt%)
adhesive resin layer (2 wt%)
EVOH layer (6 wt%)
oxygen-absorbing barrier resin composition layer (6 wt%) EVOH layer (6 wt%)
adhesive resin layer (2 wt%)
adsorbent layer (10 wt%)
polypropylene layer(29 wt%)

The evaluation results are shown in Table 1.

[Table 1]

Table 1-1

| | Layer constitution | | | | | | | | | |
|---|---|---|---|---|---|---|---|---|---|---|
| Ex. 1 | Polypropylene layer | Adhesive resin layer | EVOH layer | Oxygen-absorbing barrier resin composition layer | EVOH layer | Adhesive resin layer | Zinc-containing resin compound layer | Polypropylene layer | | |
| | 39.0 wt% | 2.0 wt% | 6.0 wt% | 6.0 wt% | 6.0 wt% | 2.0 wt% | 10.0 wt% | 29.0 wt% | | |
| Ex. 2 | Polypropylene layer | Adhesive resin layer | EVOH layer | Oxygen-absorbing barrier resin composition layer | EVOH layer | Adhesive resin layer | Zinc-containing resin compound layer | Polypropylene layer | | |
| | 39.0 wt% | 2.0 wt% | 6.0 wt% | 6.0 wt% | 6.0 wt% | 2.0 wt% | 10.0 wt% | 29.0 wt% | | |
| Ex. 3 | Polypropylene layer | Adhesive resin layer | EVOH layer | Oxygen-absorbing barrier resin composition layer | EVOH layer | Adhesive resin layer | Zinc-containing resin compound layer | Polypropylene layer | | |
| | 39.0 wt% | 2.0 wt% | 6.0 wt% | 6.0 wt% | 6.0 wt% | 2.0 wt% | 20.0 wt% | 19.0 wt% | | |
| Ex. 4 | Polypropylene layer | Regrind layer | Adhesive resin layer | EVOH layer | Oxygen-absorbing barrier resin composition layer | EVOH layer | Adhesive resin layer | Zinc-containing resin compound layer | Adsorbent layer | Polypropylene layer |
| | 15.0 wt% | 23.0 wt% | 2.0 wt% | 6.0 wt% | 6.0 wt% | 6.0 wt% | 2.0 wt% | 10.0 wt% | 10.0 wt% | 20.0 wt% |
| *Ex.: Example | | | | | | | | | | |

Table 1-2

| | Layer constitution | | | | | | | | |
|---|---|---|---|---|---|---|---|---|---|
| Ex.5 | Polypropylene layer | Adhesive resin layer | EVOH layer | Oxygen-absorbing barrier resin composition layer | EVOH layer | Adhesive resin layer | Zinc·adsorbent mixture layer | Polypropylene layer | |
| | 39.0 wt% | 2.0 wt% | 6.0 wt% | 6.0 wt% | 6.0 wt% | 2.0 wt% | 10.0 wt% | 29.0 wt% | |
| Ex.6 | Polypropylene layer | Adhesive resin layer | EVOH layer | Oxygen-absorbing barrier resin composition laver | EVOH layer | Adhesive resin layer | Zinc·adsorbent mixture layer | Polypropylene layer | |
| | 39.0 wt% | 2.0 wt% | 6.0 wt% | 6.0 wt% | 6.0 wt% | 2.0 wt% | 10.0 wt% | 29.0 wt% | |
| Com. Ex.1 | Polypropylene layer | Regrind layer | Adhesive resin layer | EVOH layer | Oxygen-absorbing barrier resin composition layer | EVOH layer | Adhesive resin layer | Adsorbent layer | Polypropylene layer |
| | 10.0 wt% | 29.0 wt% | 2.0 wt% | 6.0 wt% | 6.0 wt% | 6.0 wt% | 2.0 wt% | 10.0 wt% | 29.0 wt% |

*Ex.: Example
Com.Ex.: Comparative Example

**EP 3 659 801 B1**

Table 1-3

|  | In-layer zinc compound concentration | In-laminate zinc compound concentration | Zinc compound type | Discoloration evaluation | Transparency evaluation |
|---|---|---|---|---|---|
|  |  |  |  | Δ*E | Internal haze |
| Ex.1 | 5.0 wt% | 0.5 wt% | Zinc stearate | 1.6 | 54.3 |
| Ex.2 | 1.0 wt% | 0.1 wt% | Zinc stearate | 5.2 | 52 |
| Ex.3 | 2.0 wt% | 0.4 wt% | Zinc stearate | 1.2 | 56.3 |
| Ex.4 | 2.0 wt% | 0.2 wt% | Zinc stearate | 0.3 | 43.8 |
| Ex.5 | 5.0 wt% | 0.5 wt% | Zinc stearate | 1.6 | 62.9 |
| Ex.6 | 5.0 wt% | 0.5 wt% | Zinc oxide | 1.6 | 87 |
| Com.Ex. 1 | 0.0 wt% | 0.0 wt% | - | 6.7 | 62.6 |
| Ex.: Example Com.Ex.: Comparative Example | | | | | |

Table 1 illustrates that the present invention serves to decrease blackening of a container even when the content in the container is a sample that can cause blackening of the container. In addition, transparency is also improved in some Examples.

Industrial Applicability:

The article of the present invention can be used preferably for a container to be filled with meat or seafood containing sulfur-containing amino acids that may generate a corrosive gas or a volatile sulfur compound after being subjected to retort sterilization or the like.

**Claims**

1.    An article formed of a thermoplastic resin including at least one metal selected from three metals of Zn, Sn and Mn or one metal compound of any of the three metals, and a metal or a metal compound other than the three metals and capable of reacting with a corrosive gas or a volatile sulfur compound so as to give a color, the metal selected from the three metals or the metal compound functions as a scavenger for the corrosive gas or the volatile sulfur compound;

    wherein the metal other than the three metals is derived from Co and/or Fe;
    wherein the article has a multilayer structure including a layer that contains the metal selected from the three metals or the metal compound and another layer that contains the metal or the metal compound other than the three metals;
    wherein the multilayer structure includes at least an inner layer, an intermediate layer, an oxygen-absorbing layer and an outer layer; and
    wherein the metal selected from the three metals or the metal compound is contained in the intermediate layer, and the metal or the metal compound other than the three metals is contained in the oxygen-absorbing layer.

2.    The article according to claim 1, wherein the corrosive gas is hydrogen sulfide.

3.    The article according to claim 1 or 2, wherein the metal selected from the three metals or the metal compound is derived from zinc oxide or zinc stearate.

4.    The article according to any one of claims 1 to 3, wherein the metal or the metal compound selected from the three metals in an amount of 0.1 to 5.0 wt% is contained in the article.

5.    The article according to any one of claims 1 to 4, wherein the article having the multilayer structure is a cup-shape container having a body with a haze of not more than 70%.

**6.** The article according to claim 5, which is a container to be filled with a content containing an amino acid including elemental sulfur.

## Patentansprüche

**1.** Gegenstand, der aus einem thermoplastischen Harz ausgebildet ist, das wenigstens ein Metall, das aus drei Metallen von Zn, Sn und Mn ausgewählt ist, oder eine Metallverbindung eines der drei Metalle und ein Metall oder eine Metallverbindung beinhaltet, das/die anders als die drei Metalle ist und in der Lage ist, mit einem korrosiven Gas oder einer flüchtigen Schwefelverbindung zu reagieren, um eine Farbe zu ergeben, wobei das/die aus den drei Metallen ausgewählte Metall oder Metallverbindung als ein Radikalfänger für das korrosive Gas oder die flüchtige Schwefelverbindung wirkt;

wobei das Metall, das anders als die drei Metalle ist, von Co und/oder Fe abgeleitet ist;
wobei der Gegenstand eine mehrschichtige Struktur aufweist, die eine Schicht, die das/die aus den drei Metallen ausgewählte Metall oder Metallverbindung enthält, und eine andere Schicht beinhaltet, die das Metall oder die Metallverbindung, das/die anders als die drei Metalle ist, enthält;
wobei die mehrschichtige Struktur wenigstens eine innere Schicht, eine Zwischenschicht, eine sauerstoffabsorbierende Schicht und eine äußere Schicht beinhaltet; und
wobei das/die aus den drei Metallen ausgewählte Metall oder Metallverbindung in der Zwischenschicht enthalten ist und das Metall oder die Metallverbindung, das/die anders als die drei Metalle ist, in der sauerstoffabsorbierenden Schicht enthalten ist.

**2.** Gegenstand nach Anspruch 1, wobei das korrosive Gas Schwefelwasserstoff ist.

**3.** Gegenstand nach Anspruch 1 oder 2, wobei das/die aus den drei Metallen ausgewählte Metall oder Metallverbindung von Zinkoxid oder Zinkstearat abgeleitet ist.

**4.** Gegenstand nach einem der Ansprüche 1 bis 3, wobei das/die aus den drei Metallen ausgewählte Metall oder Metallverbindung in dem Gegenstand in einer Menge von 0,1 bis 5,0 Gew.-% enthalten ist.

**5.** Gegenstand nach einem der Ansprüche 1 bis 4, wobei der Gegenstand, der die mehrschichtige Struktur aufweist, ein tassenförmiger Behälter mit einem Körper mit einer Trübung von nicht mehr als 70 % ist.

**6.** Gegenstand nach Anspruch 5, der ein Behälter ist, der mit einem Inhalt gefüllt werden soll, der eine Aminosäure einschließlich eines elementaren Schwefels enthält.

## Revendications

**1.** Article formé d'une résine thermoplastique comprenant au moins un métal choisi parmi trois métaux de Zn, Sn et Mn ou un composé métallique de l'un des trois métaux, et un métal ou un composé métallique autre que les trois métaux et capable de réagir avec un gaz corrosif ou un composé de soufre volatil de manière à donner une couleur, le métal choisi parmi les trois métaux ou le composé métallique fonctionne comme un piégeur pour le gaz corrosif ou le composé de soufre volatil ;

dans lequel le métal autre que les trois métaux est dérivé de Co et/ou Fe ;
dans lequel l'article a une structure multicouche comprenant une couche qui contient le métal choisi parmi les trois métaux ou le composé métallique et une autre couche qui contient le métal ou le composé métallique autre que les trois métaux ;
dans lequel la structure multicouche comprend au moins une couche interne, une couche intermédiaire, une couche absorbant l'oxygène et une couche externe ; et
dans lequel le métal choisi parmi les trois métaux ou le composé métallique est contenu dans la couche intermédiaire, et le métal ou le composé métallique autre que les trois métaux est contenu dans la couche absorbant l'oxygène.

**2.** Article selon la revendication 1, dans lequel le gaz corrosif est le sulfure d'hydrogène.

**3.** Article selon la revendication 1 ou 2, dans lequel le métal choisi parmi les trois métaux ou le composé métallique est dérivé de l'oxyde de zinc ou du stéarate de zinc.

**4.** Article selon l'une quelconque des revendications 1 à 3, dans lequel le métal ou le composé métallique choisi parmi les trois métaux en une quantité de 0,1 à 5,0 % en poids est contenu dans l'article.

**5.** Article selon l'une quelconque des revendications 1 à 4, dans lequel l'article ayant la structure multicouche est un récipient en forme de gobelet ayant un corps avec un voile non supérieur à 70 %.

**6.** Article selon la revendication 5, qui est un récipient à remplir d'un contenu contenant un acide aminé comprenant du soufre élémentaire.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H01278344 B
- JP H02500846 B
- US 2005287318 A
- US 9199778 B
- US 2015104488 A